# EUROPEAN PATENT SPECIFICATION

(11) **EP 2 836 289 B1**
(45) Date of publication and mention of the grant of the patent: **17.11.2021**
(21) Application number: 13718614.4
(22) Date of filing: 09.04.2013
(51) Int. Cl.: B01D 63/04, C02F 1/44, C02F 1/00

(54) **CONTAINER FOR WATER AND HOLLOW FIBRE FILTER MODULE THEREFORE**
BEHÄLTER FÜR WASSER UND HOHLFASERFILTERMODUL DAFÜR
CONTENEUR À EAU ET FILTRE À FIBRES CREUSES ASSOCIÉ

(30) Priority: 09.04.2012 MY PI2012700167
(43) Date of publication of application: 18.02.2015
(73) Proprietor: Lifesaver IP Limited, Longton Stoke-on-Trent Staffordshire ST3 1PH (GB)
(72) Inventor: PRITCHARD, Michael William, Colchester Essex CO4 5PW (GB)
(74) Representative: Swindell & Pearson Limited
(86) International application number: PCT/GB2013/050907
(87) International publication number: WO 2013/153370

(56) References cited:
- EP-A1- 2 213 363
- WO-A1-03/014025
- WO-A1-2005/030374
- WO-A1-2010/091467
- GB-A- 2 473 256
- GB-A- 2 480 582
- JP-A- H1 129 962
- JP-A- H06 327 905
- JP-A- H08 302 762
- US-A- 5 282 964

## Description

### Field of the Invention

The present invention relates to a bulk water container for removing impurities from water to provide sterile, safe drinking water to a large community of people and a filter cartridge for the container.

### Background to the Invention

Water is heavy. Delivering it over even short distances is time consuming and expensive. It requires long logistics chains or complex and expensive pipelines to maintain supplies to remote locations. This problem is evident during military or humanitarian operations, but is also relevant to communities which live in remote locations on a permanent basis.

If members of a community choose to drink water from the surrounding environment they run the risk of becoming struck down by disease through the ingestion of bacteria or viruses living naturally in the water.

A problem with the provision of clean drinking water to remote communities is the cost and complexity of the infrastructure required to deliver clean drinking water. In many countries, Governments go to the expense of implementing a national infrastructure grid with outlet nodes located in every home. This provides drinking water, on tap, in every residence. Whilst this is a reliable means of ensuring that the population is provided with clean drinking water, the cost of installing this infrastructure is very high and can for some nations be prohibitive due to a lack of available finance. Cost is not the only concern. Complexity of maintenance can be high, since the delivery safe drinking water over long distances requires very high standard pipe-lines and a high degree of maintenance can be necessary to ensure that there is no contamination along the delivery route through the delivery network. Existing clean water delivery networks require not only a large network of pipelines, but also a large scale set of water works, which in turn consume large amounts of energy to process and distribute the water. Energy is therefore consumed not only in processing the water into clean drinking water, but also then to distribute the water under pressure throughout the network.

### MAIN REQUEST

The problems escalate even further in difficult terrains, such as mountainous regions, jungles and rainforests. National pipeline installation projects in the past have, in some examples, been abandoned due to causes such as landslides and earthquakes, which repeatedly damage pipelines and can make the installation of pipelines, as well as their maintenance, very difficult and nearly impossible.

These costs and difficult conditions result in higher numbers of people around the world continuing to suffer because National Governments and infrastructure providers are unable to install the distribution networks which have been used in the past to solve the problem of providing clean drinking water to remote communities.

Our published International patent application WO2008/037969 discloses a water bottle having a water filter which removes sediments and other deposits from the water and has a retention of greater than 99.9999% of bacteria, cysts, parasites and fungi, and greater than 99.99% of viruses from the water.

US5221473 A, US5282964 A and WO2005030374 A1 disclose hollow fiber modules having sub-groups spaced apart. WO03014025 A1, JPH08302762 A, WO2010091467 A1, GB2473256 A and GB2480582 A disclose containers with hollow fiber modules. JPH1129962 A discloses a storage type water supply device. JPH06327905 discloses a degassing membrane module.

### Summary of the Invention

According to the present invention, there is provided a filter cartridge as described in claim 1

There is also provided a bulk liquid container as described in claim 5.

The container of the present invention provides a self-contained, potentially hand operated, water storage and nano-filtration device.

The device may hold approximately 750 litres and may be configured to hold between around 200 litres and 3000 litres. Due to features of the design of the device and the filters used therein, the container can process between one and two million litres of water over its normal expected life. This life can be extended by replacing the components such as filters and/or seals and other replaceable parts as necessary.

### Brief Description of the Drawings

An example of the invention will now be described in detail with reference to the following figures in which:
Figure 1 shows an external view of a container according to the present invention;
Figure 2 shows a cut-away view of a container according to the present invention; Figure 3 shows a side external view of a container according to the present invention; and
Figure 4 shows a second cut-away view of the container of the present invention. Figure 5 shows a filter for use in the container of the present invention; and
Figure 6 shows internal details of a filter for use in the container of the present invention.

### Detailed Description

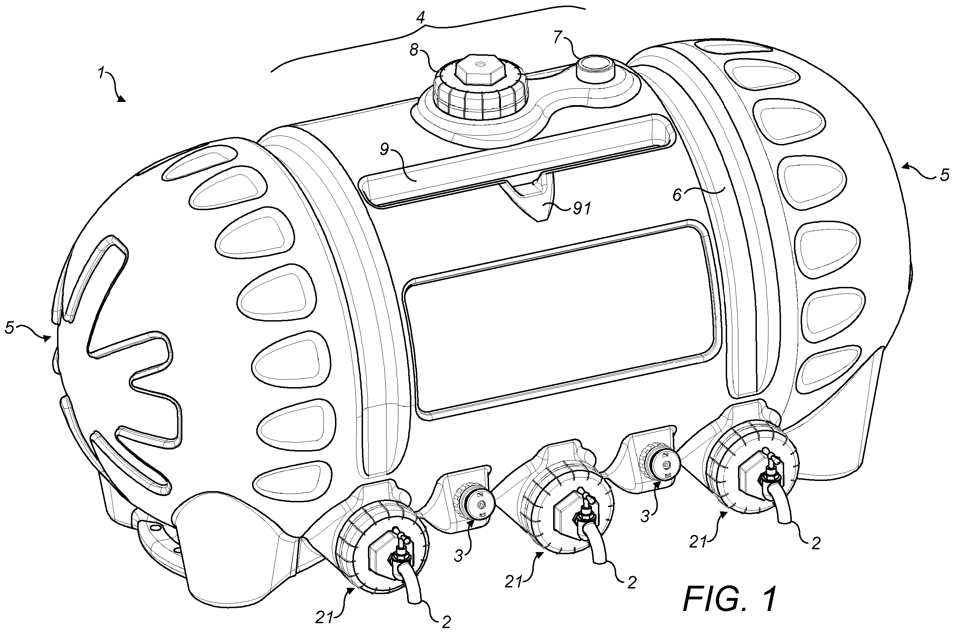

Figure 1 shows a container 1 according to the present invention, the container is sized to hold sufficient water to distribute drinking water to a local community, such as a village or industrial site. A typical sizing of the container may be 750 litres. However, the size may be between around 200 litres and 3000 litres. This is referred to herein as a bulk water container, since the water is stored in bulk for distribution to a community. This allows for the storage of a sufficient amount of water that the container need not be refilled on an excessively regular basis. For example, refilling may only be necessary once a day or less. This is advantageous if water needs to be brought to the container from a nearby water source such as a river or lake. The container can also be used in conjunction with a rain catcher, which may collect water from gutters of nearby buildings, for example. The container should not be so large that a large body of water rests substantially stagnant in the container, since this may encourage bacterial growth, particularly in warm environments.

The container is equipped with valve assemblies 2, which may comprise a standard tap for use with water. The tap may be made from metallic materials or from moulded plastics, or any other suitable material. The valve assembly 2 may also comprise a release mechanism 21 which may be arranged to release the valve assembly from the container for replacement or maintenance. The mechanism may comprise a screw-threaded cap. The mechanism 21 may be removable from the container by a two-stage release mechanism. This two-stage release mechanism can be arranged to operate in a first stage of release, where its normally operative seal is broken and water is allowed to be released from the container without the release mechanism and associated valve assembly being fully released from the container. This allows pressure within the container to be released gradually, without the release mechanism and any attached components being ejected at high velocity by the internal pressure of the container. In a second stage of release, the valve assembly is completely free of the container for removal once the internal pressure has dropped to a safe level, where the assembly won't be ejected at high velocity. The release mechanism 21 may be configured to release both the valve assembly and a filter arranged on the internal side of the release mechanism. This can allow both the valve assembly and the filter to be removed in one go for maintenance, cleaning, or replacement. This type of two-stage functionality can be provided by a screw thread which allows fluid to pass along the threads when it is first unscrewed by an initial amount, and which then releases the whole assembly when completely unscrewed. A bayonet-type connection can work in a similar manner. The valve assemblies may be located on one first side of the container as illustrated, but may also be located on opposite sides of the container, at opposite ends of a filter 10. This will affect the construction of the filter, as will be described later in relation to the filter itself.

Container 1 is arranged to be pressurized internally such that internal pressure within the container 1 encourages water on the inside of the container, through a filter attached to the inside of each of the valve assemblies 2, to the outside of the container for use as drinking water.

The container may comprise a plurality of valve assemblies 2, each having a separate release mechanism 21, although a plurality of valve assemblies may be arranged on any one release mechanism 21. Generally, one single filter is connected to each valve assembly 2. However, alternatively, several taps or valve assemblies 2 may be connected to and be in fluid communication with each filter. Container pressurisation means 3 are provided adjacent the valve assemblies, or taps, in the illustrated example. However, they could be located anywhere on the container as appropriate. An advantage of locating the container pressurisation means adjacent the valve assemblies 2 is that a user opening the valve assembly can operate the pressurisation means 3 at the same time to re-pressurise the container as water escapes through the valve assemblies. The container pressurisation means 3 may take the form of a hand pump, such that air pressure can be induced inside the container by manual operation of the hand pump. The hand pump may be angled at an angle of around 15 degrees to 20 degrees with respect to the plane of the bottom of the container. The bottom plane is defined as a substantially horizontal plane on which the container is configured to stand when placed upon a surface or a stand in its normal upright position for use. This removes the need for any electrical or other energy sources to pressurise the container and distribute water from the container.

The container 1 has a substantially capsular form. A capsular form is that of a capsule, which comprises a substantially cylindrical body, or straight sided body, being capped at either end with a substantially hemispherical form, as can be seen in Figure 1. The container 1 of the present invention has some additional features, such as legs 11 and strengthening features and ribs 6 and recesses 9. However, as can be seen in the figures, the overall form of the container is substantially capsular, or, otherwise stated, has a substantially capsule-like form. The form may be that of a substantially cylindrical capsule, which may be referred to as substantially cylindrically capsular. The outer envelope of the container is arranged to fit within a substantially rectangular cuboid form, whose dimensions are set by the height and width of the capsular main body of the container. This can allow easy transport of the capsular-form container. The container may be arranged to operate at an internal pressure of 10 KPa (0.1 bar) to 500 KPa (5 bar), preferably between 50 KPa (0.5 bar) and 100 KPa (1 bar). The container may therefore comprise a substantially cylindrical central portion 4, coupled with substantially hemispherical end portions 5, such that the water and air inside the container can be held under pressure without substantial deformation of the container. This pressurisation is unusual in water distribution containers, since the water is generally allowed to flow out through taps or valves in standard containers by forces of gravity, and so deformation due to internal pressure is not a well known problem in drinking water storage and distribution containers. For this same reason, the container of the present invention may comprise strengthening ribs 6 to bring additional strength to the cylindrical central portion 4. The hemispherical end portions 5 may also comprise strengthening features, such as ribs, scallops, recesses or channels, to impart further strength to those parts of the container. These features may also be applied on the central part 4 of the container. The container may further comprise a water feed connection point 7. This connection point 7 may be arranged for connection of a hose, which may feed to the container with water, either from a water butt, or directly from any rain water collection system such as a gutter.

Feeding the container 1 from a first-stage water collection device such as a water-butt or rain collector can reduce the amount of sediment which collects in the container 1, since this will initially settle out of the water in the water butt prior to the water being transferred to the container of the invention. Connection to the water feed connection point 7 may be via any well known hose pipe connection means such as a thread, bayonet-type connection or any other suitable pipe connection means. The container 1 may comprise a relatively large opening 8, which provides an access point to the container to fill the container by a simple pouring of liquids from vessels such as buckets or jugs. This can allow a greater number of options for filling the vessel with water. After filling opening 8 can be closed with a lid. This access point may comprise a two-stage release mechanism similar to that described above in relation to release mechanism 21, although this time it may be configured to release air in its first stage rather than water as described in relation to mechanism 21. It may therefore have a smaller flow area in its first stage of release than the mechanism 21, since that mechanism may be arranged to release water, which has a higher density and viscosity than air. Any of the release mechanisms of the container 1 may be further secured in place by a secondary retention means arranged to prevent accidental or unauthorised release of the release mechanism. A simple interlock, such as a clip or clamp for preventing rotation of a screw thread, may be an example of a secondary retention means. A more secure example may be a deadlock secured with a key.

The container may further be provided with at least one recess 9 on its upper side, which may be configured to receive some form of structural insert, such as a base for an upper platform to be placed on the container. The recess 9 may be concave and may have flat inner sides, to correspond with a substantially rectangular structure made from wood or other structural materials, so that the platform placed on top of the container is held stably in place. The recess is "concave" when it creates a depression in the wall of the container in the direction of the interior of the container, but may still have straight sides to accommodate the supporting structure placed on top. The recess 9 may comprise a drainage gully 91 which forms a liquid release, or drainage, region, arranged to allow liquid collected in the recess to escape when the container is arranged with the recess on its top side as illustrated in Figure 1. This prevents the possible drawback of rain water collecting and stagnating in the recesses, which are provided for principally structural reasons. It may be undesirable to allow water to collect in them for this reason. The strengthening recesses provided in the container may also comprise liquid release regions, or gullies, arranged in a similar manner to prevent the collection and stagnation of rain fall or spilled water. As well as the gullies shown, tubes, openings or drainage holes of any sort may provide this function.

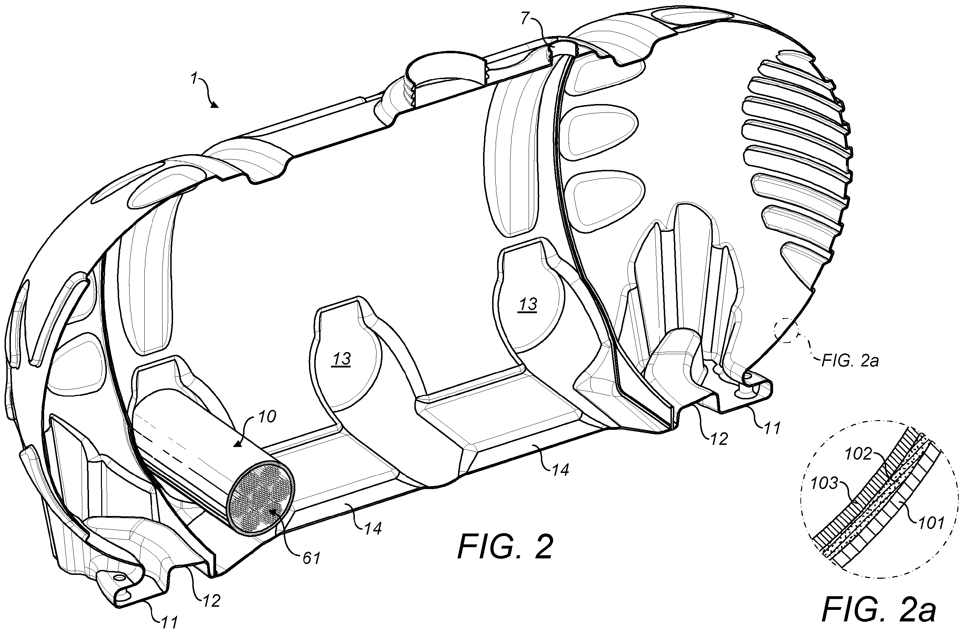

Figure 2 shows an internal view of the container of Figure 1, cut approximately in half. Here, internal features of the container can be seen. The container has support portions 11, which may be legs, arranged on its bottom side to support the container stably on a substantially flat surface. As illustrated in Figure 2, the legs 11 are hollow and their internal volume forms a part of the overall internal volume of container 1. The legs are arranged such that their internal volume forms substantially the lowest part of the container when it is in its upright position, with the legs arranged downwardly. A strengthening channel 12 may be formed in the legs to improve stability and rigidity of the bottom of the container. This helps to maintain the container stably on a flat surface when under internal pressure. A filter 10 of the container of the present invention is shown located in a filter accommodating space 13 and further filter accommodating spaces 13 are shown formed in the outer wall of the container. The filter 10 and filter recesses 13 are arranged substantially adjacent the bottom of the container. The recesses 13 may be arranged to cradle the filters 10 along the length of the filter outer body, such that support is provided substantially along the length of the filter.

It is possible to incorporate a shroud to provide some overhead protection for the filters to encourage particulates in the water to fall around and away from the filters themselves rather than settling on top of the filters in the container. A problem which can occur when using locally collected water or rain water in the container of the present invention is that a substantial amount of sediment can accrue over time in the bottom of the container 1. Since the filters are also located towards the bottom of the container 1 in order to make best use of the water in the container 1 as it empties, there is a substantial risk of the filters getting blocked by sediment and other solids resting in the bottom of the container 1. To address this problem, solids collecting recesses 14 may be provided to help to guide sediment away from the filters and into the legs 11 of the container. These recesses 14 are located on the bottom side of the container and substantially between the filter and the legs 11 in a vertical direction.

Due to the size and nature of the container 1, it is not practical to turn the container upside down to clean out the solids and so a drainage port may be provided at a substantially low or lowest point in the container. This may, for example, be located in either or both of the solids collecting recesses 14 and/or in one or both of the legs 11 of the container. It is preferable to have the ports located in the lowest portion of the container so that solids, which will tend to collect in the lowest portion of the container, can be substantially entirely cleaned out of the container. Further, at the lowest point in the container, the water pressure due to gravity will be at its greatest, although this pressure will also be increased by any internal air pressure in the container if it is sealed.

Since the container will be sealed, and subject to internal pressure, it may be necessary to include a one way valve in water feed connection point 7, or in any pipe connected to it, so that when the container is pressurised internally, the pressure does simply not escape up any feed or hose connected to port 7.

The walls of the container may have a multilayer construction and the layers from which the walls are constructed may comprise any one, or any two or all of: a structural layer 101; an insulating layer 102; and an internal, water facing, layer 103. Structural layer 101 may be constructed from a material which is primarily selected for its structural strength and may be a protective layer made from a strong material such as metal or plastic, although plastics are preferred. This is because they tend to be more light-weight, are not subject to corrosion and can be less expensive. Layer 103 may be an inner layer, facing and contacting the water inside the container 1. This layer may be selected from materials appropriate for use with drinking water. These materials are known as potable grade materials and could be a plastic such as high density polyethylene (HDPE). This layer may also comprise a micro biological inhibitor, such as Microban™. In between layers 101 and 103 there may optionally be placed an insulating layer 102, which may be made from a foam or other thermally insulating material. This can help to protect the water inside the container from increases in temperature outside of the container. This can be particularly advantageous where daily temperatures in the environment in which the container is used rise and, if the water sealed inside the container were heated, this could induce or increase bacterial growth which could represent a health risk. This can also avoid the water in the container freezing, in cold temperatures, which is advantageous since the membranes in the filter can be damaged by freezing temperatures.

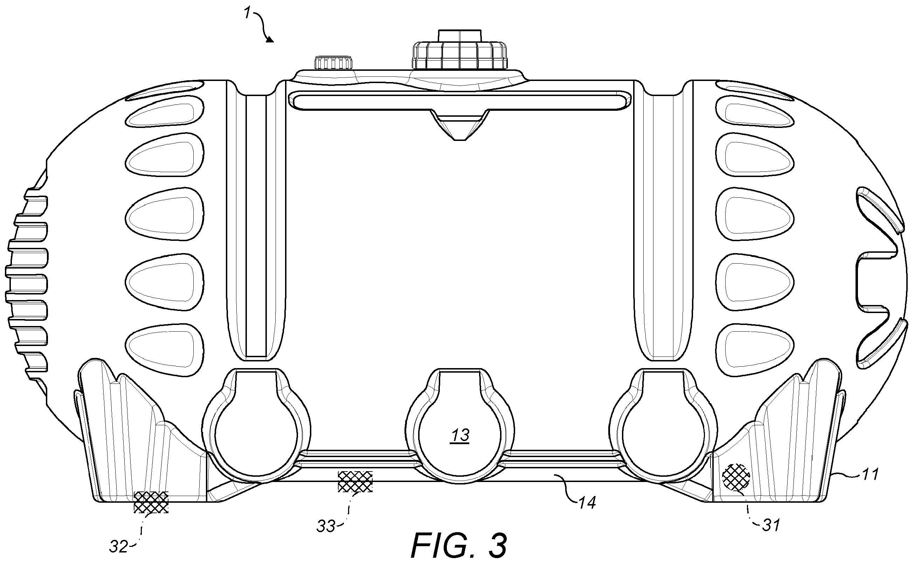

Figure 3 shows a rear, or second side, view of the container. The second side or rear of the container is opposite the first side or front of the container where the taps or valve means 2 are located. The outside of the filter accommodating recesses 13 can be seen in the wall of the container. Figure 3 shows a number of optional locations for a drainage port on the container. It may be placed at location on a side of a leg 11 of the container, for example, at location 31. If the container is mounted off the ground, then the port may be located on an underside of the leg at a location such as is indicated by 32. This is preferential if practicable, since this is the lowest point in the container. It is generally preferable to locate the drainage port at the lowest point possible in the container. Alternatively, the drainage ports may be located at location 33 in the sediment collecting channel 14, although this is less preferred, since it is not the lowest point and will not allow the greatest amount of dirt, solids or sediment to be flushed from the container.

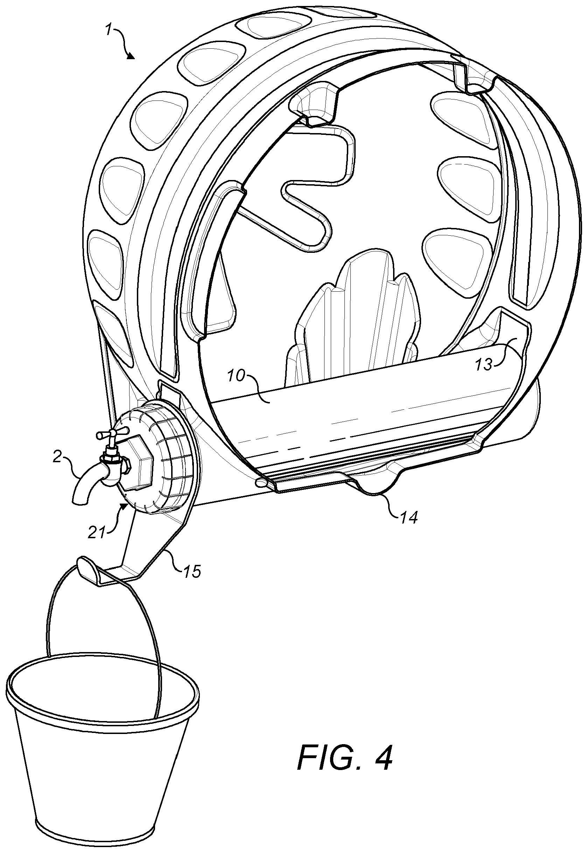

Figure 4 shows an alternative cut-away view of the container 1 of the present invention. Filter 10 may be mounted to the back of the valve assembly 2 as an integral part of the assembly, or may alternatively be mounted in the filter recess 13 and held in place by separate retention means. The release mechanism 21 may be configured to perform two functions of holding the valve assembly in place and also providing mechanical retention of the filter 10.

Solids collecting recess 14 can be seen, and may provide a flow-path for solids from the filter recesses 13 toward a sump area located in the leg 11. A support, or hanger, 15 may be provided below the valve assembly 2 for a user to hang a bucket or other water vessel on. Other peripheral attachments may be provided such as a shower head attached to the valve assembly 2, and a soap dish provided adjacent the valve assembly 2.

The container of the present invention is also useful for sanitation and improved cleanliness in the communities in which it is utilised. Providing clean water and soap encourages washing and improved health and hygiene among a community.

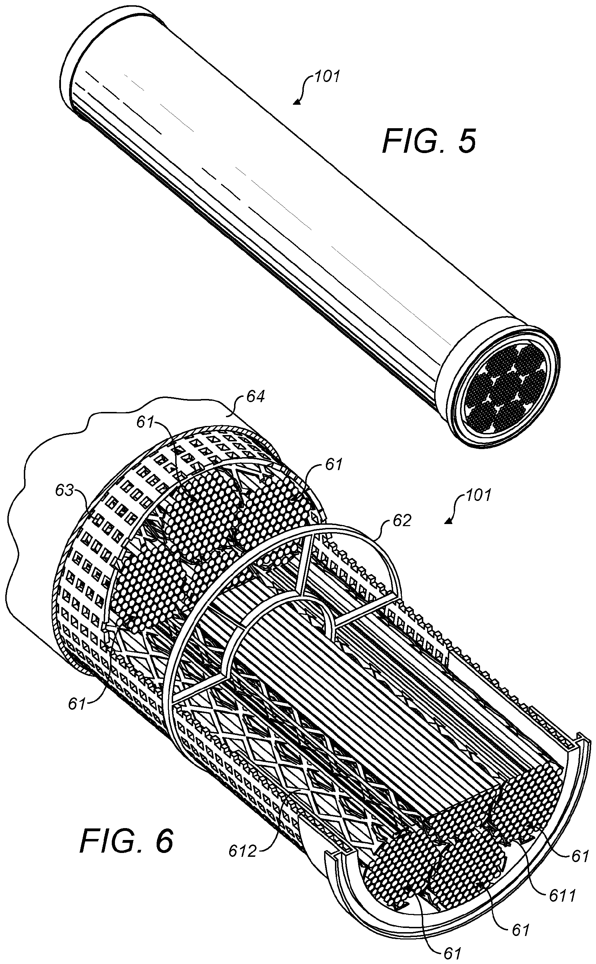

Figure 5 shows the filter cartridge 101 for use in the water container of the present invention. It is used in the invention and located as illustrated by filter 10 in the previous figures. The illustrated filter may be substantially cylindrical in shape and may fit into a filter recess 13 of the container 1.

Preferred water filters for use with the present invention are suitable for ultrafiltration: that is to remove all particles of a size greater than 0.01 microns. In another preferred embodiment the filter is suitable for nanofiltration or reverse osmosis. Reverse osmosis filters are capable of removing everything (including salts and oils) apart from pure water (H₂O) from a liquid. Nanofiltration removes particles of a size greater than 0.001 microns (including aqueous salts).

Water is passed through the water filter under a pressure differential. This allows the water to be passed through finer filters than would be possible if the container 1 were not pressurised.

A pore size of less than or equal to 25 nanometres is sufficient to remove most microbiological matter from the liquid, including viruses, thereby providing safe drinking water and a far more effective portable water filtration system than has previously been available. However, for additional security, preferred embodiments of the invention have a pore size of less than or equal to 20 nanometres, and more preferably have a pore size of less than or equal to 15 nanometres.

As is known in the art, the pore size of a material is in fact an average of the individual sizes of the pores (or holes) in the material, since it is inevitable that any material comprising a large number of pores will include some variation in these individual sizes. Preferred filters for use in the present invention have a tightly defined distribution of pore sizes such that the difference between the maximum pore size and the average pores size is minimized. Preferably, the standard deviation of the pore size distribution is less than 30% of the average pore size, and more preferably is less than 15% of the average pore size. In preferred embodiments of the invention, the filter has a maximum pore size of less than or equal to 30 nanometres, more preferably, less than or equal to 25 nanometres, and most preferably less than or equal to 20 nanometres. In other embodiments, the maximum pore size may be even lower in order to perform nanofiltration or reverse osmosis, for example.

Preferably, the water container of the present invention will filter water with a pressure differential of any size. For example, the operating pressure differential of a preferred embodiment is preferably greater than 10 kPa (0.1 bar), more preferably in the range of 10 kPa (0.1 bar) - 500 kPa (5 bar), more preferably in the range of 50 kPa (0.5 bar) - 100 kPa (1 bar). In containers of the size required for the present invention the water is encouraged through the filters by gravity when the valve is open. This gravitational pressure, or head, is more significant than in smaller-sized containers where similar filters are used and so internal pressures used need not necessarily be as high. Further, the larger surface areas used in the filters of the present invention allow for a greater flow rate for a given pressure differential across the filter or between the container-side of the filter and the ambient pressure of the surrounding environment. Thus the container of the present invention can be used at lower pressures than smaller containers while still achieving a satisfactory flow-rate through the filters. Due to these factors, a user can actuate a pump of the container of the present invention by a relatively small amount to extract water from the container. As described above, the system is sealed so as to allow a pressure differential between the inside of the container and the outside atmosphere to be created to drive water out of the valve when opened. When the valve is open, it will be apparent that internal pressure induced by actuation of the pump reduces as water leaves the container through the valve and the internal static pressure at the valve eventually reaches equilibrium with the external atmospheric pressure at the valve. Once this equilibrium is reached, water ceases to exit the container through the valve. This means that even if a valve is left open by a user, the flow of water from the container will eventually stop once the internal and external static pressures across the valve are equal. This acts to prevent unnecessary or inadvertent waste of water in the container, by providing an inherent and automatic excess-flow inhibiting arrangement.

The water filter of the present invention is a membrane filter. It comprises hydrophilic membranes. Hydrophilic membranes are attractive to water and therefore water is passed through them in preference to other liquids and to gases. In this way, not only is the filtration offered by the preferred embodiments improved, but it is possible to use the filter even when it is not completely immersed in the liquid.

The membranes are capillary hollow fibre membranes. These membranes act to filter the water as only particles smaller than their pore size may pass through them. The fibre membranes may incorporate carbon or other chemical elements, or reverse osmosis membranes. A combination of different types of filter membranes may be included in the filter. These may include ultrafiltration, nanofiltration and reverse-osmosis membranes.

The water filter comprises a filter cartridge comprising a plurality of fibre membranes. Preferably, the base incorporates a seat to receive the filter cartridge to resist lateral movement. This helps reduce the strain on the fibre membranes.

Once water enters through the wall of a hollow fibre membrane under the influence of a pressure differential, it is transferred along its tube-like structure to the output. As a result, water may enter at any point along the membrane wall and reach the output while also being filtered.

The preferred fibre membranes have a retention of greater than 99.999995% of bacteria, cysts, parasites and fungi, and greater than 99.999% of viruses from the water. The fibre membranes also remove sediments and other deposits from the water.

Fibre membranes suitable for use with the present invention are available commercially, for example X-flow (TM) capillary membranes from Norit (www.norit.com) may be used. This hollow fibre ultra-filtration membrane 22 is effective to screen all turbidity, bacteria as well as viruses.

In the preferred commercial embodiment of the water container 1, given the relatively large capacity (typically 200 to 3000 litres), the length of the preferred fibre membranes is relatively long - typically between 50 to 200 cm, preferably 80 cm. For such lengths in the container of the present invention, the preferred filter cartridge incorporates 600 to 800, preferably 650 to 700, fibre membranes, giving an initial flow rate of between 7 to 40 litres/minute, which may be achieved at a pressure differential across the filter of 50 kPa. Each of 7 bundles of fibres in the filter cartridge may comprise 96 individual fibres. It is important to provide a reasonable flow rate to encourage users to take filtered water from the container when required, rather than transfer filtered water to a different container for storage, where it would quickly become contaminated. Advantageous flow rates may be achieved where the total surface area provide by the filter membranes is in the region of 10 m² to 12 m², preferably around 11m².

The water container 10 optionally also incorporates an additional carbon filter (not shown), which sits within a void within the valve assembly 2, and through which water can pass before leaving through the tap or valve. Carbon filters are known to be effective in the removal of chemicals from water. The carbon filter used in the preferred embodiment is an active carbon filter, although other types of carbon-based filters (such as charcoal filters) may be adopted.

In Figure 6 a cut-away section of a filter cartridge 101 for use in a preferred embodiment the present invention is illustrated. The filter cartridge has a plurality of sub-groups 61 of filter membranes 611. Each sub-group 61 in the example illustrated has 96 filter membranes 611, however, useful numbers of filter membranes per sub-group can be in the range of 80 to 100 filter membranes per sub-group. Each sub-group is surrounded by a sheath 612 for holding the sub-group together in a single bundle. This can prevent damage during assembly and hold the sub-group together for increased structural integrity. The sheath 612 may be constructed of a mesh or net or polynet or other rigid or resilient water-penetrable material.

The filter membranes 611 may be bundled in further groups of 7 within each subgroup 61 as illustrated. This configuration allows some spacing to be kept between adjacent membranes, which makes efficient use of space in the filter while allowing a sufficient flow-area for water to reach the membranes and establish the required flow-rate through the filter.

A spacer 62 is provided in between sub-groups 61 of filter membranes 611. The spacer has a central circular or hexagonal portion surrounding a central sub-group and a series of spokes protruding substantially radially from the central portion such that spacing is maintained in between adjacent sub-groups 61 of filter membranes 611. A plurality of spacers may be provided at plural axial locations along the length of filter cartridge 101 to provide support and spacing relatively evenly along the length of the filter cartridge.

Surrounding the filter membranes is an outer structural member 63 in the form of a substantially cylindrical grid-patterned or mesh-like structure, which may comprise a structure through which water can penetrate to reach the filter membranes 611, while maintaining a structural support around the filter membranes 611.

Around the structural member 63 is a primary filter here illustrated in the form of an outer filter mesh 64, which acts as a primary filter to prevent silt, dirt and sediment from contacting the filter membranes 611 inside the structural member 63. Filter mesh 64 may be made from cloth or other fibrous material or from a fine plastic mesh having an opening size of around 100microns. The outer filter mesh 64 may comprise activated carbon.

The fibre membranes 611 may be potted at an open end proximal the valve assembly 2 and sealed and capped at a distal end. A mesh wrap helps hold the fibre membranes together. In a configuration where the container has taps or valves on opposite sides, and/or taps or valves are arranged at opposite ends of a filter cartridge 101, the fibre membranes 611 may not be capped, but may be open at both ends, such that water entering the fibre membranes 611 can be delivered to either one of the taps or valves at either end of the filter cartridge 101.

## Claims

1. A filter cartridge (10, 101) for a water storage container (1), the filter cartridge comprising a plurality of sub-groups (61) of hydrophilic capillary hollow fibre membranes (611), the sub-groups being spaced apart from one another to allow water to flow between the sub-groups,
wherein the hollow fibre membranes within each sub-group are surrounded by a sheath (612) for holding the sub-group together in a single bundle
and
the hollow fibre membranes are surrounded by a structural member (63) arranged to provide structural support around the hollow fibre membranes, while allowing water to penetrate through the structural member to reach the hollow fibre membranes
wherein the structural member is arranged between a primary filter (64) and the hollow fibre membranes, wherein the primary filter is around the structural member (63) and the primary filter is arranged to prevent silt, dirt and sediment from contacting the hollow fibre membranes (611) inside the structural member (63),
wherein the fibre membranes are either (i) potted at an open end, sealed and capped at a distal end or (ii) are not capped and are open at both ends and
the cartridge is arranged such that once water enters through the wall of a hollow fibre membrane under the influence of a pressure differential, it is transferred along its tube-like structure to an output
wherein a spacer (62) is provided in between the sub-groups (61) of filter membranes (611), the spacer having a central circular or hexagonal portion surrounding a central sub-group and a series of spokes protruding substantially radially from the central portion such that spacing is maintained in between adjacent sub-groups (61) of filter membranes (611).

2. A filter cartridge according to claim 1, wherein at least one of the sub-groups comprises between 80 and 100 hollow fibre membranes.

3. A filter cartridge according to claim 2, wherein at least one of the sub-groups comprises 96 hollow fibre membranes.

4. A filter cartridge according to any of claims 1 to 3, wherein the sub-groups are arranged as six sub-groups surrounding a central sub-group.

5. A bulk liquid container (1) for the storage and distribution of water to a community as drinking water, the container comprising:
a container housing for holding water, the housing having a substantially capsular form;
an output valve (2) arranged to release water from the container;
a filter cartridge (10) of any preceding claim arranged to filter water passing from the internal volume of the container, out of the container through the output valve, the filter cartridge comprising one or more membranes which are effective to pass water in preference to air under the influence of a pressure differential; and,
a pump (3) for raising the internal pressure of the container.

6. A container according to claim 5, wherein the form of the container housing is a substantially cylindrical capsule.

7. A container according to claim 5 or claim 6, having a capacity of between 200 litres and 3000 litres.

8. A container according to claim 7, having a capacity of 750 litres.

9. A container according to any one of claims 5 to 8, wherein the container is arranged to operate at an internal pressure of 10 kPa to 500 kPa.

10. A container according to claim 9, wherein the container is arranged to operate at an internal pressure of between 50 kPa to 100 kPa.

11. A container according to any one of claims 5 to 10, wherein the container comprises at least one filter cartridge recess (13), the recess arranged to receive the filter cartridge.

12. A container according to claim 11, wherein the filter cartridge recess further comprises an opening arranged to accommodate at least one valve assembly (2) in fluid communication with the filter cartridge.

## Patentansprüche

1. Filterpatrone (10, 101) für einen Wasserspeicherbehälter (1), wobei die Filterpatrone mehrere Untergruppen (61) von hydrophilen Kapillar-Hohlfasermembranen (611) umfasst, wobei die Untergruppen voneinander beabstandet sind, damit Wasser zwischen den Untergruppen fließen kann,
wobei die Hohlfasermembranen innerhalb jeder Untergruppe von einer Hülle (612) umgeben sind, um die Untergruppe in einem einzigen Bündel zusammenzuhalten,
und
wobei die Hohlfasermembranen von einem Strukturelement (63) umgeben sind, das eingerichtet ist, eine strukturelle Unterstützung um die Hohlfasermembranen herum bereitzustellen, während Wasser durch das Strukturelement eindringen kann, um die Hohlfasermembranen zu erreichen,
wobei das Strukturelement zwischen einem Primärfilter (64) und den Hohlfasermembranen angeordnet ist, wobei sich der Primärfilter um das Strukturelement (63) befindet und der Primärfilter eingerichtet ist, zu verhindern, dass Schlick, Schmutz und Sediment in Kontakt mit den Hohlfasermembranen (611) innerhalb des Bauteils (63) gelangen,
wobei die Fasermembranen entweder (i) an einem offenen Ende vergossen, an einem distalen Ende versiegelt und verschlossen sind oder (ii) an beiden Enden offen sind und
die Patrone so eingerichtet ist, dass Wasser, sobald es unter dem Einfluss eines Druckunterschieds durch die Wand einer Hohlfasermembran eintritt, entlang seiner rohrartigen Struktur zu einem Auslass übertragen wird,
wobei ein Abstandshalter (62) zwischen den Untergruppen (61) der Filtermembranen (611) vorgesehen ist, wobei der Abstandshalter einen zentralen kreisförmigen oder hexagonalen Abschnitt, der eine zentrale Untergruppe umgibt, und eine Reihe von Speichen aufweist, die im Wesentlichen radial vor den zentralen Abschnitt vorstehen, so dass ein Abstand zwischen benachbarten Untergruppen (61) der Filtermembranen (611) gehalten wird.

2. Filterpatrone nach Anspruch 1, wobei mindestens eine der Untergruppen zwischen 80 und 100 Hohlfasermembranen umfasst.

3. Filterpatrone nach Anspruch 2, wobei mindestens eine der Untergruppen 96 Hohlfasermembranen umfasst.

4. Filterpatrone nach einem der Ansprüche 1 bis 3, wobei die Untergruppen als sechs Untergruppen angeordnet sind, die eine zentrale Untergruppe umgeben.

5. Flüssigmenge-Behälter (1) zur Speicherung und Verteilung von Wasser an eine Gemeinde als Trinkwasser, wobei der Behälter umfasst:
ein Behältergehäuse zum Halten von Wasser, wobei das Gehäuse eine im Wesentlichen kapselartige Form aufweist,
ein Ausgangsventil (2), das eingerichtet ist, Wasser aus dem Behälter abzulassen,
eine Filterpatrone (10) nach einem der vorhergehenden Ansprüche, die eingerichtet ist, Wasser zu filtern, das aus dem Innenvolumen des Behälters durch das Ausgangsventil aus dem Behälter austritt, wobei die Filterpatrone eine oder mehrere Membranen umfasst, die unter dem Einfluss einer Druckdifferenz Wasser anstelle von Luft wirksam durchlassen, und,
eine Pumpe (3) zum Erhöhen des Innendrucks des Behälters.

6. Behälter nach Anspruch 5, wobei die Form des Behältergehäuses eine im Wesentlichen zylindrische Kapsel ist.

7. Behälter nach Anspruch 5 oder Anspruch 6 mit einem Fassungsvermögen zwischen 200 und 3000 Litern.

8. Behälter nach Anspruch 7 mit einem Fassungsvermögen von 750 Litern.

9. Behälter nach einem der Ansprüche 5 bis 8, wobei der Behälter eingerichtet ist, bei einem Innendruck von 10 kPa bis 500 kPa zu arbeiten.

10. Behälter nach Anspruch 9, wobei der Behälter eingerichtet ist, bei einem Innendruck zwischen 50 kPa und 100 kPa zu arbeiten.

11. Behälter nach einem der Ansprüche 5 bis 10, wobei der Behälter mindestens eine Filterpatronen-Aussparung (13) umfasst, wobei die Aussparung eingerichtet ist, die Filterpatrone aufzunehmen.

12. Behälter nach Anspruch 11, wobei die Filterpatronen-Aussparung ferner eine Öffnung aufweist, die eingerichtet ist, mindestens eine Ventilanordnung (2) in Fluidverbindung mit der Filterpatrone aufzunehmen.

## Revendications

1. Cartouche filtrante (10, 101) pour un conteneur de stockage d'eau (1), la cartouche filtrante comprenant une pluralité de sous-groupes (61) de membranes de fibres creuses capillaires hydrophiles (611), les sous-groupes étant espacés les uns des autres pour permettre à l'eau de circuler entre les sous-groupes,
dans laquelle les membranes de fibres creuses dans chaque sous-groupe sont entourées d'une gaine (612) pour maintenir le sous-groupe ensemble en un seul paquet
et
les membranes de fibres creuses sont entourées d'un élément structurel (63) agencé pour fournir un support structurel autour des membranes de fibres creuses, tout en permettant à de l'eau de pénétrer à travers l'élément structurel pour atteindre les membranes de fibres creuses
dans laquelle l'élément structurel est disposé entre un filtre primaire (64) et les membranes de fibres creuses, dans laquelle le filtre principal est disposé autour de l'élément structural (63) et le filtre principal est agencé pour empêcher le limon, la saleté et les sédiments d'être mis en contact avec les membranes de fibres creuses (611) à l'intérieur de l'élément structurel (63),
dans laquelle les membranes de fibres sont soit (i) enrobées au niveau d'une extrémité ouverte, scellées et coiffées au niveau d'une extrémité distale ou (ii) ne sont pas coiffées et sont ouvertes aux deux extrémités et
la cartouche est agencée de telle sorte qu'une fois que l'eau entre au travers de la paroi d'une membrane de fibre creuse sous l'influence d'un différentiel de pression, elle est transférée le long de sa structure ressemblant jusqu'à un tube à une sortie
dans laquelle une entretoise (62) est prévue entre les sous-groupes (61) de membranes de filtrage (611), l'entretoise ayant une partie circulaire centrale ou hexagonale entourant un sous-groupe central et une série de rayons faisant saille sensiblement radialement à partir de la partie centrale de telle sorte que l'espacement soit maintenu entre les sous-groupes adjacents (61) de membranes de filtrage (611).

2. Cartouche filtrante selon la revendication 1, dans laquelle au moins l'un des sous-groupes comprend entre 80 et 100 membranes de fibres creuses.

3. Cartouche filtrante selon la revendication 2, dans laquelle au moins l'un des sous-groupes comprend 96 membranes de fibres creuses.

4. Cartouche filtrante selon l'une quelconque des revendications 1 à 3, dans laquelle les sous-groupes sont disposés sous la forme de six sous-groupes entourant un sous-groupe central.

5. Conteneur de liquide en vrac (1) pour le stockage et la distribution d'eau à une communauté en tant qu'eau potable, le conteneur comprenant :
un boîtier de conteneur pour maintenir de l'eau, le boîtier ayant une forme sensiblement capsulaire ;
une vanne de sortie (2) agencée pour délivrer de l'eau provenant du conteneur ; une cartouche filtrante (10) selon l'une quelconque des revendications précédentes, agencée pour filtrer l'eau passant du volume interne du conteneur, à l'extérieur du conteneur à travers la vanne de sortie, la cartouche filtrante comprenant une ou plusieurs membranes efficaces pour laisser passer l'eau de préférence à l'air sous l'influence d'un différentiel de pression ; et,
une pompe (3) pour augmenter la pression interne du conteneur.

6. Conteneur selon la revendication 5, dans lequel la forme du boîtier du conteneur est une capsule sensiblement cylindrique.

7. Conteneur selon la revendication 5 ou la revendication 6, ayant une capacité comprise entre 200 litres et 3000 litres.

8. Conteneur selon la revendication 7, ayant une capacité de 750 litres.

9. Conteneur selon l'une quelconque des revendications 5 à 8, dans lequel le conteneur est agencé pour fonctionner à une pression interne de 10 kPa à 500 kPa.

10. Conteneur selon la revendication 9, dans lequel le conteneur est agencé pour fonctionner à une pression interne comprise entre 50 kPa et 100 kPa.

11. Conteneur selon l'une quelconque des revendications 5 à 10, dans lequel le conteneur comprend au moins un évidement pour cartouche filtrante (13), l'évidement étant agencé pour recevoir la cartouche filtrante.

12. Conteneur selon la revendication 11, dans lequel l'évidement pour la cartouche filtrante comprend en outre une ouverture agencée pour accueillir au moins un ensemble de vannes (2) en communication de fluide avec la cartouche filtrante.
